# EUROPEAN PATENT SPECIFICATION

(11) **EP 1 324 813 B1**
(45) Date of publication and mention of the grant of the patent: **01.08.2007**
(21) Application number: 01981855.8
(22) Date of filing: 11.10.2001
(51) Int. Cl.: B01D 39/16, B03C 3/28

(54) **ELECTROSTATIC FIBROUS FILTER WEB AND METHOD OF MAKING SAME**
ELEKTROSTATISCH GELADENES FILTERFASERFLIES UND VERFAHREN ZU SEINER HERSTELLUNG
TOILE DE FILTRAGE FIBREUSE ELECTROSTATIQUE ET SON PROCEDE DE REALISATION

(30) Priority: 13.10.2000 EP 00203536
(43) Date of publication of application: 09.07.2003
(73) Proprietor: 3M Innovative Properties Company, St. Paul, MN 55133-3427 (US)
(72) Inventor: BOTH, Hendrik, NL-5121 CD Rijen (NL)
(74) Representative: Aleandri-Hachgenei, Lorraine E.
(86) International application number: PCT/US2001/042664
(87) International publication number: WO 2002/030544

(56) References cited:
- WO-A-96/14202
- US-A- 5 436 054
- US-A- 5 800 769
- US-A- 5 900 305

## Description

### Field of the Invention

The present invention relates to an electret nonwoven filter medium that has been ultrasonically consolidated at a plurality of spots. The present invention further relates to a process for producing the nonwoven filter medium.

### Background of the Invention

Nonwoven webs of electret fibers are typically formed of loosely associated fibers. The filters can be electrostatically charged prior to, during, or after, being formed into a nonwoven web. A particularly effective method of forming a nonwoven electret fiber filter is described in U.S. Reissue Patent No. 30,782 (Van Turnhout et al.). The electret fibers in this patent are formed from a corona charged film that is fibrillated to form the charged fibers. The charged fibers can then be formed into a nonwoven web by common methods such as carding or air laying. This charging method provides a particularly high density of injected charges. However, problems are encountered with forming webs from these precharged fibrillated fibers. The fibers are generally quite large and uncrimped. They also have a resistance to bending. Due in part to these properties, the fibers resist formation into a uniform coherent web, particularly at low basis weights. U.S. Patent No. 5,230,800 proposes needle punching of the filter web of fibrillated fibers to a reinforcement scrim so as to produce a filter that has substantially uniform properties across the web. However, the mandatory use of a reinforcement scrim in this method can produce an additional pressure drop of the filter. Also, the obtained uniformity should desirably be further improved. Moreover, because of the needle punching, the manufacturing speed of the filter medium is substantially limited.

U.S. Patent No. 4,363,682, provides an alternative method for making a more uniform web. In order to provide a more coherent web, as well as one that resists shedding fibers, this patent proposes a post-embossing treatment. This post-embossing welds the outer surface fibers together allegedly providing a more coherent and comfortable web for use as a face mask. However, this treatment will also tend to result in a more condensed web, which would increase pressure loss over the filter.

U.S. Patent No. 5,143,767 describes a thermal spot embossing step to reinforce a nonwoven web of electrostatically charged and fibrillated dielectric fibers so as to obtain a web of high strength which is free from self dusting. The embossing ratio mentioned in this U.S.-patent is between 2 and 35% of the total surface of the filter. U.S. Patent No. 5,143,767 also mentions that it could be contemplated to use ultrasonic welding instead of thermal embossing of the nonwoven web. However, according to U.S. Patent No. 5,143,767 this would be difficult and it would not be possible to make thin filters. Also, the filters would allegedly be poor in toughness. Moreover, since ultrasonic equipment is generally limited to fairly narrow width webs, additional difficulties would arise in producing a filter web that has dimensions exceeding the width of typical ultrasonic equipment.

U.S. Patent No. 5,900,305 teaches the use of ultrasonic welding techniques to spot laminate a plurality of nonwoven filter webs of melt blown fibers so as to produce a high efficiency filter and disclose arranging several ultrasonic units next to each other so as to be able to weld the laminate across its full width. The different units are then powered by a single controller. It appears that such an arrangement would not be suitable to consolidate a nonwoven filter web so as to produce a filter with uniform properties across its surface.

U.S. Patent No. 5,436,054 mentions embossing, ultrasonic welding and needle punching to join a network of reticulated fleeces of electret partially split films together so as to improve the dimensional stability of the electret filter. However, no particular details of these methods are given.

It is accordingly a desire of the present invention to provide a further method to provide an electret nonwoven filter medium that has uniform properties across its surface and that can be produced at higher speed and therefore at a lower cost. It is further desirable to provide an electret nonwoven filter medium that can be readily converted into a pleated filter with minimum manufacturing burden. The electret nonwoven filter medium can preferably be produced over a broad range of basis weight and preferably has a low pressure drop. Desirably, the performance of the filter medium is improved such as for example the filtration efficiency and particle loading capacity of the filter medium.

### Disclosure of the Invention

In one aspect, the present invention provides an electret nonwoven filter medium comprising a nonwoven filter web of electrostatically charged fibrillated fibers ultrasonically joined to each other at a plurality of spots distributed across the nonwoven filter web. The total surface occupied by the spots is less than 5% of the surface of the nonwoven filter web, preferably the surface occupied by the spots is in the range of 0.2 to 2, more preferably 0.5 to 1.5%. The shape of the spots is not particularly limited but is generally square, rectangular or circular. The size of each of the individual spots is typically less than 10⁻²cm² and is preferably in the range of 10⁻³ to 10⁻² cm². The number of spots per cm² is at least 2 and is typically in the range of 2 to 5. The number of spots necessary per cm² will generally depend on the basis weight of the non-woven filter web with a low basis weight requiring more spots and a high basis weight generally requiring less spots.

It was found that an electret nonwoven filter medium in accordance with the present invention has highly uniform filter properties across the web and can be produced at an increased speed relative to a method involving needle punching thereby minimizing the manufacturing costs. Furthermore, the use of a scrim layer is not necessary to maintain the uniform filter properties and the electret nonwoven filter medium can be conveniently used to make a pleated filter by ultrasonically welding a netting to the filter medium which will provide the necessary stiffness to the medium so as to be able to pleat the filter medium. The electret nonwoven filter medium was further found to have a good strength and dimensional stability making it suitable for a variety of filter applications. For example, it was found that for a web having a basis weight of at least 50g/m², ultrasonically welding suffices to obtain a dimensionally stable web without the need for any additional supporting layers such as a netting or a scrim, thus resulting in reduced pressure drop.

In a further aspect of the present invention, a method is provided to produce a filter medium as described above. In accordance with the method of the present invention to produce the filter medium, electrostatically charged dielectric fibrillated fibers are produced. This can be readily accomplished by the methods that have been described in U.S. Reissue Patent No. 30,782 (Van Turnhout et al.) and U.S. Reissue Patent No. 31,285 (Van Turnhout et al.). The method described in these patents comprises feeding a film of a high molecular weight non-polar substance, stretching the film, homopolarly charging the stretched film with the aid of corona elements and fibrillating the stretched charged film. Suitable film forming materials include polyolefins, such as polypropylene, linear low density polyethylene, poly-1-butene, polytetrafluoroethylene, polytrifluorochloroethylene; or polyvinylchloride; aromatic polyarenes; such as polystyrene; polycarbonates; polyesters; and copolymers and blends thereof. Preferred are polyolefins free of branched alkyl radicals and copolymers thereof. Particularly preferred are polypropylene and polypropylene copolymers. Various functional additives known in the art can be blended with the dielectric polymers or copolymers such as poly(4-methyl-1-pentene) as taught in U.S. Patent No. 4,874,399, a fatty acid metal salt, as disclosed in U.S. Patent No. 4,789,504, or particulates, as per U.S. Patent No. 4,456,648.

The film may be charged in any of the known ways. For example, the film may be locally bilaterally charged by means of corona elements that carry on either side of the film equal but opposite potentials. Thereby the film is charged to almost twice as high a voltage as by means of unilateral charging, at one and the same corona voltage. The charged polymeric film material can be fibrillated in several ways. For example, a needle roller with metal needles running against the film can be used. Thereafter, the continuous fibers may be cut to a desired length.

The obtained electrostatically charged fibers can then be formed into a nonwoven web layer through carding or air laying or any other web forming process. In order to increase the basis weight to the nonwoven filter web, it may further be subjected to a randomizer or a cross-lapping operation.

To consolidate the non-woven filter web the fibers are ultrasonically joined to each other at the plurality of spots (at least 2 per cm²) that occupy less than 5% of the surface of the nonwoven filter web. To effect this consolidation, the non-woven filter web is generally transported through a gap that is maintained between an ultrasonic vibrating unit and a mating tool of an ultrasonic device. The gap, i.e., the distance between the vibrating unit and the mating tool of the ultrasonic device is generally kept constant while consolidating the non-woven filter web. By "constant" in this connection is meant that the gap should not deviate more than 20% of the desired value, preferably not more than 10%. If the non-woven filter web has dimensions exceeding 30 cm to 50 cm, it is preferred to put several ultrasonic devices in parallel next to each other along the direction of the web that is perpendicular to the direction in which the web is being transported. Although horns are available today that have a width of up to 60 cm, such horns may not provide the desired uniformity. To produce a highly uniform web when putting two or more horns in parallel, the gap in each of the individual ultrasonic devices (hom - anvil arrangement) is preferably controlled independently. That is, the gap in each of the ultrasonic devices is controlled independent of the gap in another ultrasonic device.

An ultrasonic device that is particularly suitable for use in connection with the present invention has been described in WO 96/14202 and is commercially available from Herrmann Ultraschalltechnik in Germany. Such an ultrasonic device comprises a rigidly mounted vibrating unit and a mating tool which is preferably a rotating drum. A gap is maintained between the vibrating unit (weld horn) and mating tool (anvil) and this gap can be adjusted prior and during the ultrasonic welding operation through an adjusting device that is also rigidly mounted. The gap between the mating tool and vibrating unit is maintained constant through a controller which steers the adjusting device in response to a measurement that is indicative of a changing gap. For example, the gap can be controlled by an inductively working sensor that is mounted on the rotating anvil drum. Signals from the sensor are wirelessly transmitted to the controller which detects difference with a target value and compensates for any changes via the adjusting device. Alternatively, a force sensor can be included in the vibrating unit to measure the welding force at regular intervals, for example once per revolution of the anvil drum. The controller can then compare the measured force with a target value and adjust the gap if necessary through the adjusting device. This method may be called force control of the gap. In the force control method, the gap may fluctuate because the welding force will depend on the thickness of the web as well as the distance between the horn and anvil. As a result of thickness variations in the web, the gap may fluctuate to keep a target welding force. Force control is the preferred method in this invention. Voltage control is a still further method that can be employed to keep the gap constant. In this method, the vibrating unit and mating tool are part of a low voltage circuit. Shortly before the vibrating unit would touch the anvil drum, the circuit would close and the controller would receive a signal to retract the vibrating unit to a programmed position through the adjusting device. Then the vibrating unit is automatically lowered again step by step until the next retraction is necessary. This loop ensures a precise small gap between the horn and anvil.

As mentioned above, the mating tool, i.e. anvil, of the ultrasonic device is preferably a rotating drum. The surface of this rotating drum is generally patterned to produce a desired pattern of spots in the nonwoven filter web where the fibers of the web are consolidated. The pattern may be a irregular pattern whereby the spots will be distributed irregular across the web. The pattern may also be regular or a repeating irregular pattern. Examples of patterns that may be used are illustrated below in the drawings.

The non-woven filter web may be transported on a scrim layer through the gap between the vibrating unit and mating tool of the ultrasonic device if a scrim layer is desired. The scrim material will generally comprise a thermoplastic material such that the scrim layer can be ultrasonically bonded to the non-woven filter web at the spots simultaneously with the consolidation of the nonwoven filter web at the spots. The scrim layer material can be any known reinforcement scrim, woven or nonwoven. Nonwoven scrims are generally preferred in terms of cost and degree of openness. The scrim material is also preferably polymeric, and for purposes of recyclability, preferably formed of a polymer ultrasonically bondable with the material of the electret nonwoven web. A scrim of nonwoven material will generally be treated to increase tensile properties such as by thermoembossing, calandaring, sonic bonding, binder fibers or the like. A typical scrim material would be a spunbond polypropylene nonwoven web. An alternative scrim layer for use in this invention is disclosed in U.S. Patent No. 5,800,769. The scrim disclosed in this latter patent has discrete individual open areas with an average cross-sectional area as viewed from the plane of the filter media of at least 0.25 mm², generally between 0.25 mm² and 10 mm². The weight of this scrim is generally between 0.1 g/m² and 0.4 g/m². The scrim disclosed in U.S. Patent No. 5,800,769 that is preferably used in this invention is a cross laminated web of polyethylene fibers which can be readily ultrasonically bonded to the filter media of this invention. When the non-woven filter web is transported on the scrim layer, the latter will generally underly the filter web. However, it is also possible to include a scrim layer between two or more nonwoven web layers which can then be consolidated and bonded to the scrim layer in the ultrasonic device.

Alternatively, the non-woven filter web may also be transported on a paper web that is not affected by the ultrasonic welding operation. This paper web can be recollected after the ultrasonic welding operation leaving a ultrasonically consolidated filter web without a scrim layer.

If a pleatable electret nonwoven filter medium is desired, a netting can be laminated to the non-woven filter medium to provide the necessary stiffness allowing it to be pleated. With the term netting in connection with the present invention is meant a highly open network of fairly thick fibers. Generally the fibers of a netting will have a thickness between 0.5 and 1.5 mm, defining between them generally regularly shaped open areas of an average cross-sectional area between 1 mm² and 20 mm². It is a further advantage of the manufacturing method of the present invention that such a netting can be laminated to the nonwoven filter medium simultaneous with the ultrasonic consolidation of the web. In particular, the netting will typically comprise a thermoplastic material and the netting can be transported together with the nonwoven filter web through the gap of the ultrasonic devices where the fibers of the web are ultrasonically joined to each other at the plurality of spots. At the same time, the thermoplastic netting will become ultrasonically bonded to the non-woven filter web at these spots. The thus obtained electret nonwoven filter medium can be pleated by any of the known pleating techniques and is thus suitable for the manufacture of a pleated filter. Accordingly, a pleatable electret nonwoven filter medium with uniform properties can be produced in a convenient and cost effective way. In particular, the method of the present invention is more convenient and cost effective than prior art methods in which the netting material needs to be glued or otherwise laminated to the filter web in a separate lamination step.

The electret nonwoven filter medium of the present invention may further be laminated to further filter layers. For example, the electret nonwoven filter medium may be laminated with a nonwoven filter layer of melt blown microfibers (BMF layer). The advantage of such a laminate would be that the electret nonwoven filter medium would act as a prefilter to the nonwoven filter layer of melt blown micro-fibers which would otherwise easily get clogged. Thus, the electret nonwoven filter medium of the present invention, which is generally a more open structure then the BMF layer would collect the large particle in a fluid to be filtered and the BMF would filter out particles that would otherwise pass the electret nonwoven filter medium of the invention. The method of the present invention, allows for a convenient, cost efficient and reliable production of such a laminate because the BMF layer can be ultrasonically bonded to the nonwoven filter web while the latter is being ultrasonically consolidated. Furthermore, the filter web of the invention has been found to have an improved efficiency thus resulting in a more effective pre-filter resulting in a longer lifetime of a filter arrangement including such a pre-filter.

### Brief Description of the Drawings

The invention is further illustrated with reference to the following drawings without however the intention to limit the invention thereto.
Figure 1 is a partial and schematic representation of an ultrasonic device comprising vibrating units and a mating tool in form of a rotating drum.
Figure 2 is an enlarged partial view of the rotating drum as shown in Fig. 1.
Figure 3 is a schematic representation of a second embodiment of a rotating drum.
Figure 4 is a schematic representation of an enlarged portion of the second embodiment of the ultra-sonic device comprising a rotating drum as shown in Fig. 3.
Figure 5 is a planar view of an ultrasonically joined non-woven electret filter medium obtained through the use of an ultrasonic device comprising a rotating drum configuration according to Figs. 1 and 2.
Figure 6 is a planar view of an ultrasonically joined non-woven electret filter medium obtained through the use of an ultrasonic device comprising a rotating drum configuration according to Figs. 3 and 4.
Figure 7 is a side view of equipment for the ultrasonic joining of non-woven electret filter media in accordance with Fig. 1.
Figure 8 is a side view of a second embodiment for the ultrasonic joining of a non-woven electret filter medium together with a thermoplastic netting.
Figure 9 is a side view of a third embodiment of ultrasonically joining non-woven filter medium together with a thermoplastic netting and a scrim.
Figure 10 is a side view through an ultrasonic device in accordance with Fig. 1 comprising several ultrasonic vibrating units arranged next to each other.
Figure 11 shows a side view of one of the ultrasonic devices in accordance with Fig. 10 showing one method of a gap control.
Figure 12 shows a diagram of the efficiency versus the dust particle size for non-woven filter media according to the invention in comparison to a needle punched filter medium.

### Detailed Description of the Preferred Embodiments

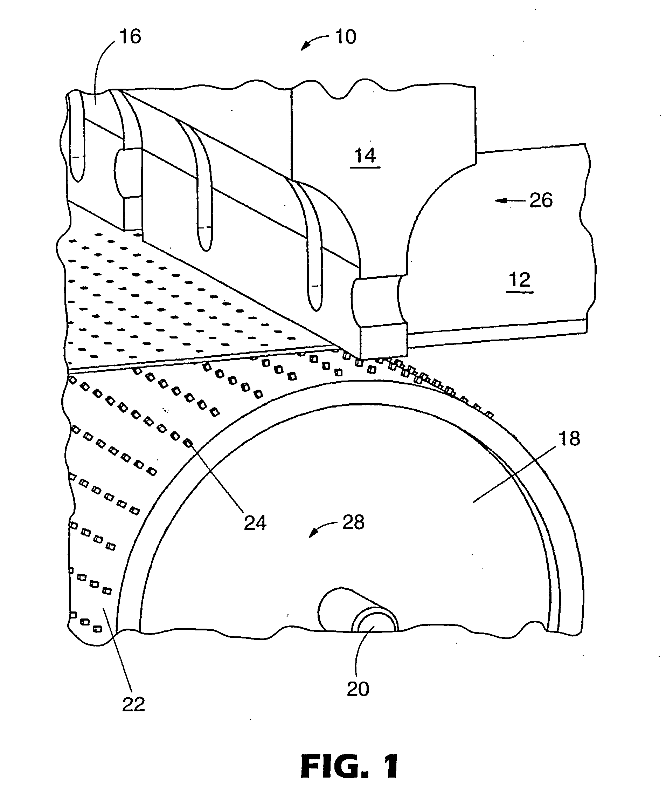

Figure 1 shows a device 10 for the ultrasonic joining of an electret non-woven filter medium 12. The basic components of the device are vibrating units 14, 16 in the form of weld horns driven by driving units. Typically several weld horns 14, 16 are arranged next to each other to allow an ultrasonic joining of a relatively wide electret non-woven filter medium 12. The weld horns 14,16 cooperate with a mating tool or an anvil, which in this embodiment has the form of a rotating drum 18. Only the drum 18 itself and its axle 20 are shown in figure 1. The rotating drum 18 has an outer, essentially cylindrical surface 22, which is provided with a multiplicity of protrusions 24. During the ultrasonic joining the electret non-woven filter medium is moving in the direction of arrow 26 and the rotating drum in the direction of arrow 28. The weld horns 14, 16 and the protrusions 24 of rotating drum 18 are arranged in a manner that they form a small gap (with the filter medium placed between the weld horns 14, 16 and the protrusions 24 of the drum) the gap being so small that at the points of the protrusions 24 the energy density is high enough to achieve the ultrasonic welding.

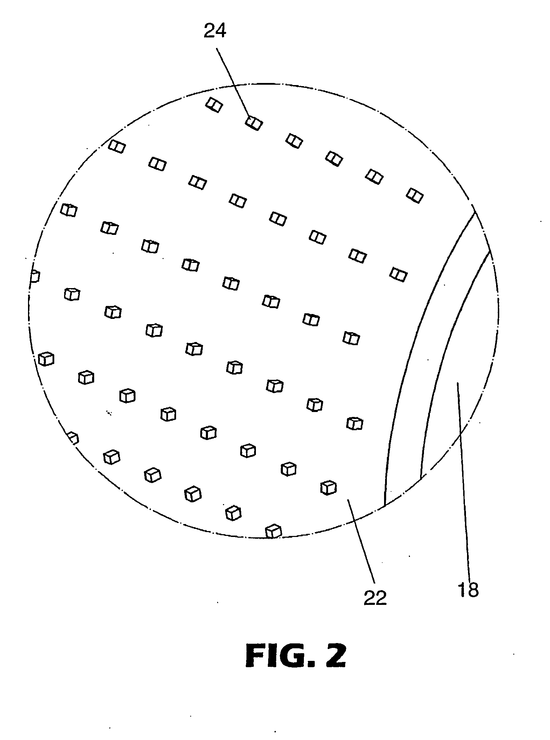

Figure 2 shows an enlarged view of the surface 22 of the rotating drum 18 and the protrusions 24. These protrusions are integrally formed with the surface 22 of the rotating drum through generally known methods such as machining, spark welding and the like. The rotating drum is up to one meter or more in length and it has a diameter of several decimeters.

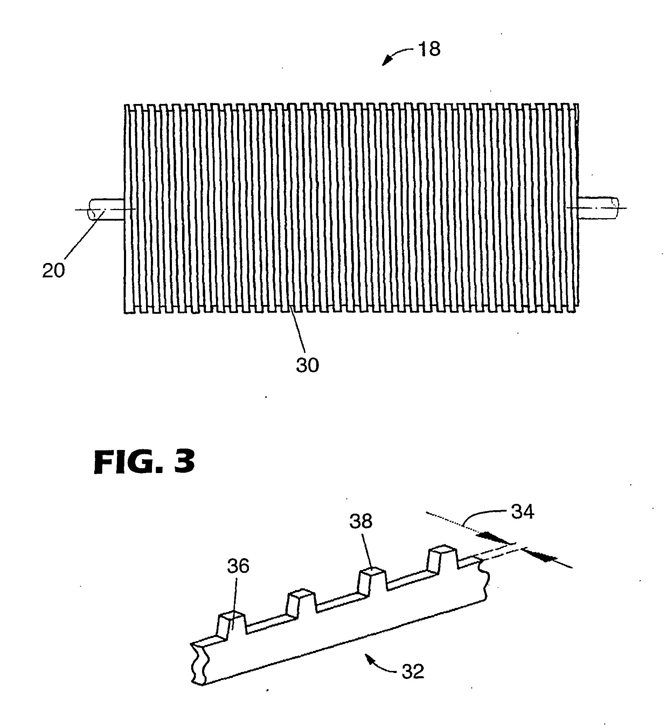

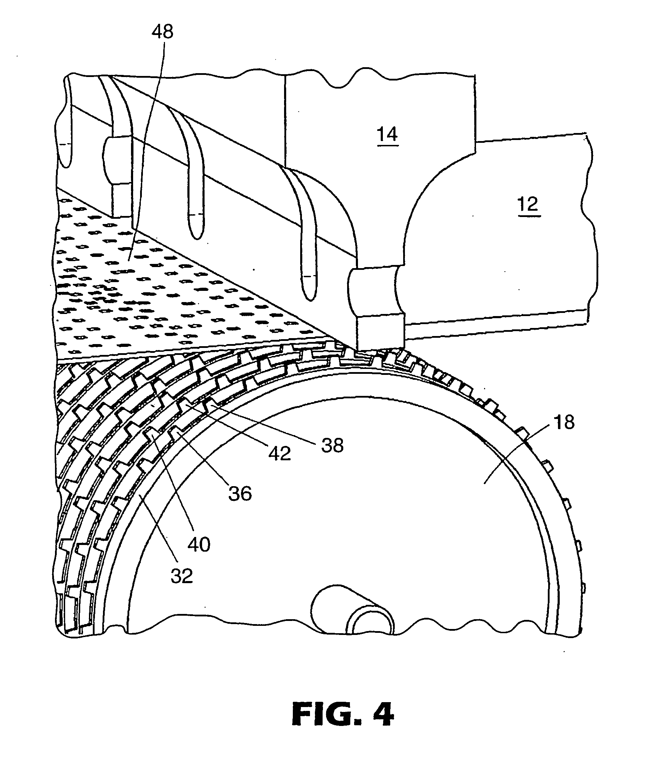

An alternative method is shown in Figs. 3 and 4. The rotating drum 18 with its axle 20 is provided with a spiral grove 30 as can be seen from Fig. 3. Separately a metal band 32 of a substantial length is manufactured through conventionally known methods such as machining or stamping. Typically a band of a given width 34 is unwound from a supply roll and passed through a stamping equipment. The configurations as shown in Figs. 3 and 4 are punched out creating a sequence of protrusions 36 which may have a trapezoidal cross-section. Fig. 4 shows, similar to Fig. 1, a portion of rotating drum 18 with a spirally wound grove (not shown) into which the band 32 has been inserted. This is done in a manner that the protrusions 36 with the upper surface 38 form a pattern which is similar to the pattern depicted in Fig. 2 where protrusions 24 have been created on surface 22 of rotating drum 18.

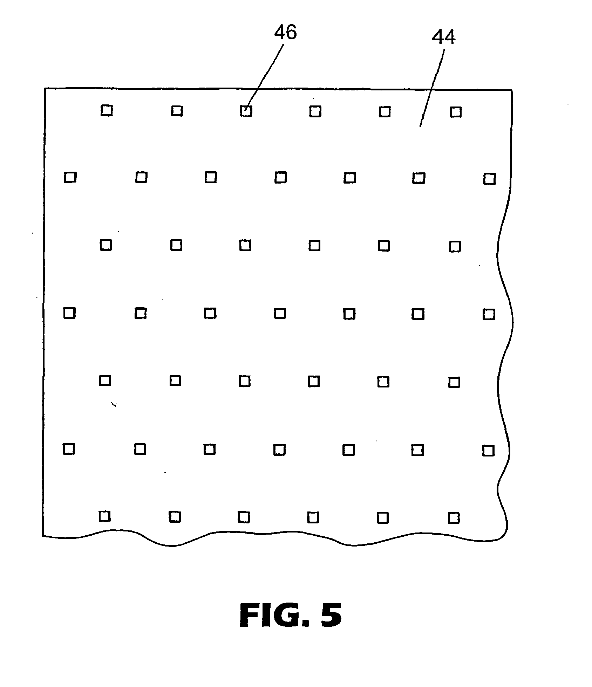

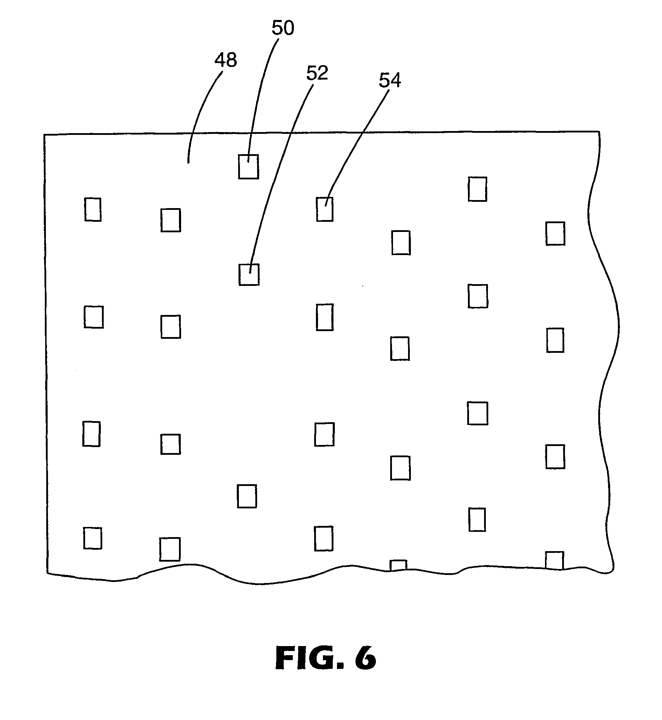

Band 32 is spirally wound into the grove of the rotating drum 18 to achieve a staggered configuration of protrusions 36 as can be seen on Fig. 4. The intention is to have 2 adjacent protrusions 40, 42 of one row placed in a manner that the protrusion 38 in the next row is arranged between the protrusions 40 and 42, preferably centrally between them. Resulting welding patterns on the filter web can be seen from Figs. 5 and 6. Fig. 5 shows the planar view onto the ultrasonically joined electret non-woven filter medium 44 with a substantially regular arrangement of the welding spots 46. Fig. 6 shows the corresponding filter medium 48 with welding spots arranged in a somewhat irregular but repeating pattern. Due to the spiral winding of band 32 welding spot 50 for example is not exactly arranged between the welding spots 52, 54 of the subsequent row. Therefore, the appearance of a filter medium 48 produced with a rotating drum according to Figs. 3 and 4 is different. For the functionality of the electret filter media, this is of no considerable significance.

The size and number of protrusions 24 according to Figs. 1 and 2 and the size and number of protrusions 36, 38 according to Figs. 3 and 4 is such that the total surface occupied by the protrusions is less than 5% of the surface of the rotating drum which results in about the same percentage on the ultrasonically joined non-woven filter medium. In accordance with the invention, the number of welded spots per cm² on the non-woven filter medium should be greater than 2. In case of Figs. 3 and 4, for example, bands 32 will have a width of 0.6-1.0 mm, preferably 0.8 mm. Further, the surface area at the end of the protrusions 36, 38 can be either circular, elliptic, quadratic, rectangular or of other shapes. In a particular embodiment a square configuration would be preferred having the same dimension as the width of the band namely 0.6-1.0 mm preferably, 0.8 mm. The distance between two adjacent protrusions as for example between the protrusions 40 and 42 in Fig. 4 can be in the order of 6-10 mm, preferably 7 mm, and the distance between adjacent bands can be in the range of 4-6 mm, preferably 5 mm. This is then the distance between two adjacent turns in the spiral grove as depicted in Fig. 3. In principle the same applies for the embodiment as depicted in Figs. 1 and 2 where the protrusions are machined, spark eroded or otherwise generated. The dimensions are in principle identical. The numbers as given above serve only as a general guideline for a preferred configuration, the decisive feature, however, is that the total surface area of the contact portions of the protrusions is below 5% of the surface of the rotating drum, preferably below 2% and that the number of spots per cm² is at least 2.

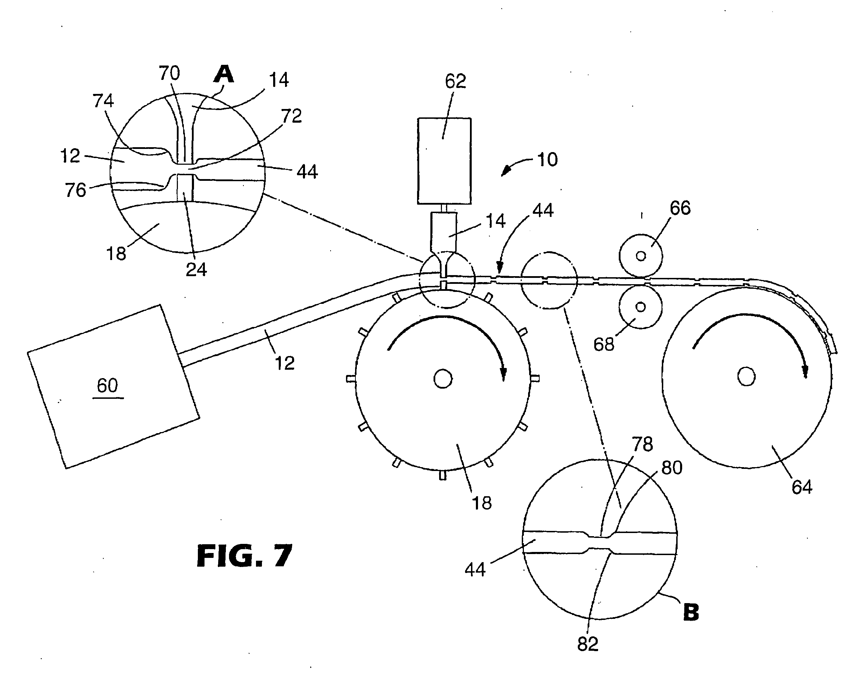

Figs. 7-9 show side views of the equipment used for the ultrasonic joining of the fibers and other components of electrostatic non-woven filter media. The filter medium 12 is obtained from generally known equipment 60 which produces a non-woven filter web of electrostaticaly charged fibrillated fibers. These fibers are guided to the ultrasonic device 10 as depicted in Figs. 1-4 and described above. The vibrating unit in the form of a weld horn 14 is driven by the unit 62 which includes all features necessary to generate the ultrasonic vibrations as well as means to control the gap. The weld horn 14 corresponds with the mating tool or anvil which has the form of drum 18 rotating in the direction 28 as explained above. The ultrasonically treated web 44 is taken up by the roller 64. The ultrasonically treated web 44 passes through a pair of rollers 66, 68 which simultaneously or additionally also can take over the function of cutting web 44 for example on the 2 sides which may not be welded or otherwise useless and furthermore, there may be additional cutting knives along the width of web 44 in order to generate smaller portions of the ultrasonically treated web 44 which are rolled up by roller 64.

The entrance of the untreated web 12 into the ultrasonic unit 10 is depicted in more detail with the enlarged section A. It can be seen that the weld horn 14 with its lower end 70 and the protrusion 24 on the rotating drum 18 form a gap 72. Furthermore, it can be seen that the incoming web 12 is significantly thicker than the outgoing ultrasonically treated web 44. When entering the gap 72 the incoming web 12 is compressed which can be seen from the portions 74 and 76. This compression either takes place automatically or with the help of additional guidance means (not depicted). Furthermore, the weld horn 14 may be significantly wider than the protrusion 24. There is generally no structure on the lower surface 70 of weld horn 14.

The cross-sectional configuration of the ultrasonically treated web 44 is shown in the enlarged portion B. The fibers of web 44 have been ultrasonically joined at the portion 78 and there are smooth transitions 80 and 82 between the welded portion and the normal portion of web 44. Furthermore, it can be seen that the thickness of the ultrasonically treated web 44 is significantly smaller than that of the original web 12 resulting from the ultrasonic treatment. It can also be seen that the welded portion 78 has indents on both sides, the upper side and the lower side, although only the protrusions 24 are in contact with the web 12 on the lower side, however, a total compression occurs which causes the upper portion to be compressed so that transitions on both sides 80 and 82 are observed.

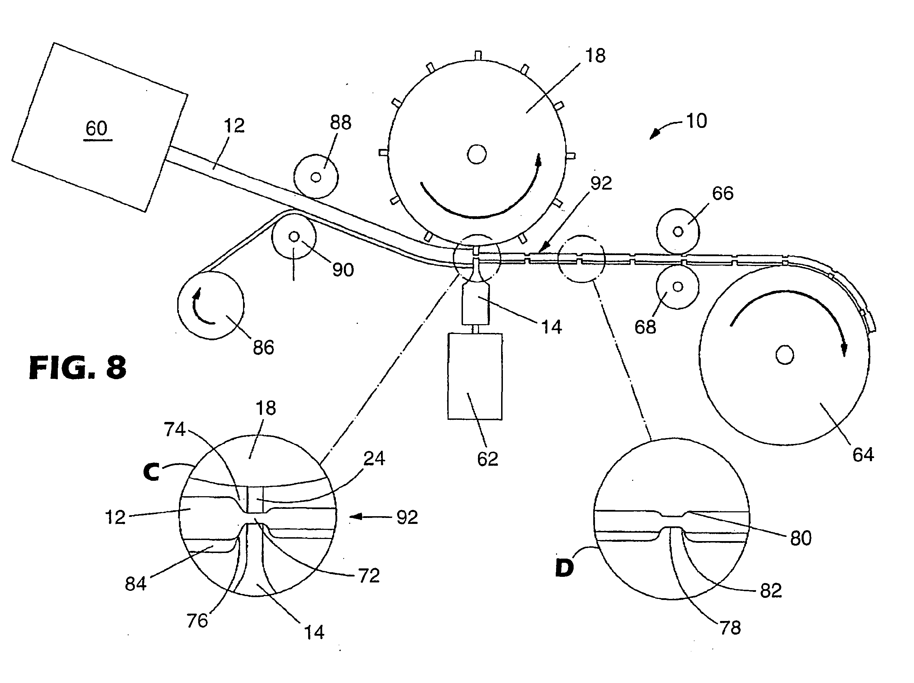

Fig. 8 shows an alternative arrangement for the ultrasonic equipment. Also here the original web 12 is obtained from the unit 60 and guided to the ultrasonic device 10 which is shown in a reversed arrangement. The rotating drum 18 is on the upper side and the weld horn 14 and the corresponding driving unit 62 are on the lower side. The essential difference is that in addition to the originally untreated web a second layer 84 is guided onto the ultrasonic device 10 through the use of the dispenser roll 86 and two guidance rolls 88 and 90. This additional layer 84 is a netting onto which the web can be ultrasonically bonded. Netting 84 and web 12 are joined to yield the configuration 92 which is taken up by the take-up roller 64 and the guidance rolls 66 and 68.

The difference relative to the embodiment shown in Fig. 7 can be seen again with the two enlarged portions C and D. The original web 12 and the netting 84 are guided to the gap 72 created by the weld horn and the protrusion 24 of the drum 18 to generate the laminate 92. Also here a guidance and a compression of web 12 and netting 84 at the portions 74 and 76 can be seen. The compression takes place primarily on the original web 12 while the netting is only slightly compressed during the ultrasonic welding procedure. The enlarged view D shows a similar configuration as the view B in Fig. 7 also showing the portion 78 compressed through the ultrasonic welding and the transition areas 80 and 82.

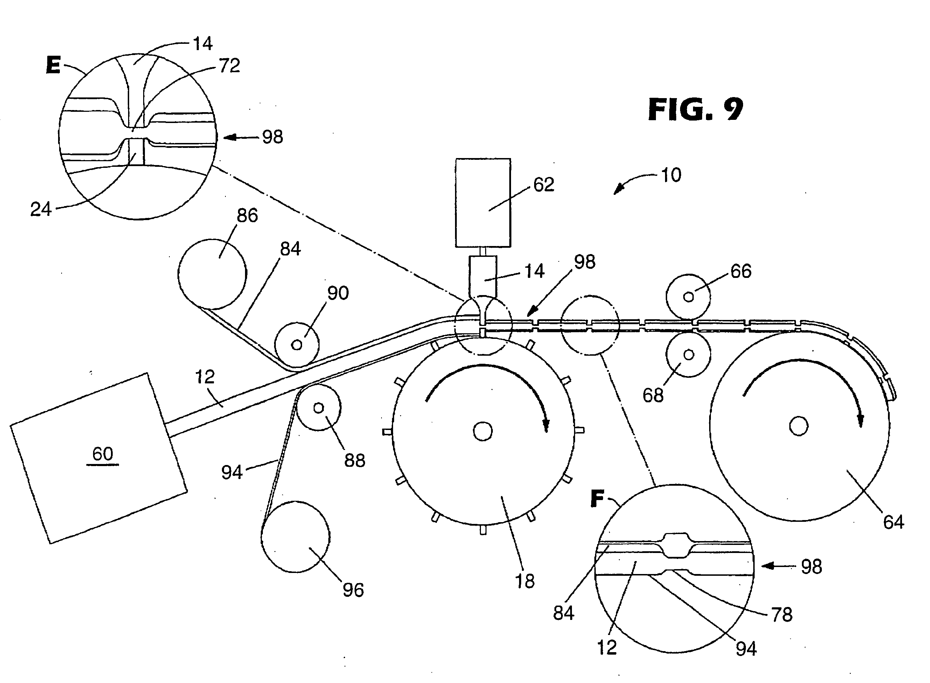

Fig. 9 shows a third configuration of the ultrasonic equipment the numerals being the same as in the preceding figures. The added feature here is that a third layer 94 is supplied from the roller 96. This is a scrim layer. In this case the ultrasonic device 10 is again arranged in the same sense as in Fig. 7, this essentially depends on the practicability in the process. Portion E is in principle comparable to portions A and C in Figs. 7 and 8 respectively. Portion F shows again that there is a three-layer configuration with the netting 84, the filter web 12 and the scrim 94 altogether being combined to the laminate 98 which then is taken up be roller 64 in the same manner as described above. It should be noted that these are three typical configurations, however, a multiplicity of further variations can be contemplated, for example a multiplicity of layers including layers of spun bond fibers or melt-blown fibers.

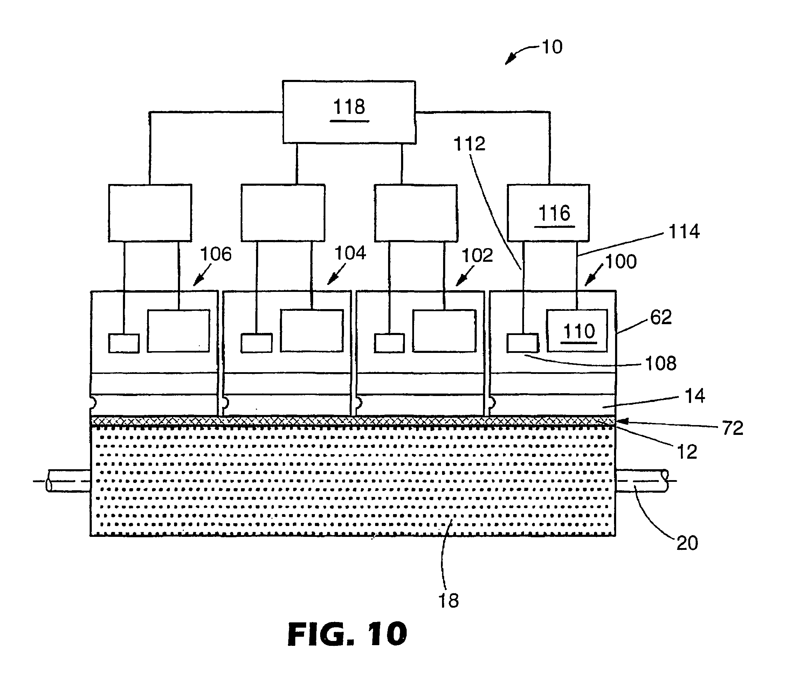

Fig. 10 provides a side view of the ultrasonic equipment in accordance with the preceding figures showing the rotating drum 18 with its axis 20 on the lower side and the weld horns 14 with driving units 62 on the other side, all of them being arranged so that the web 12 can pass therebetween. The ultrasonic equipment includes four individual ultrasonic vibrating devices 100, 102, 104, 106 all operating independently of each other. Each of them is equipped within the driving unit 62, with a sensor 108 for monitoring the gap between hom and anvil and an actuator 110. Sensor 108 and actuator 110 are electrically connected through electrical wirings 112 and 114 to an electronic control unit 116 which ensures that the gap 72 is maintained within tolerances which are small enough in order to ensure an ultrasonic joining of the components of the web 44 or laminate 92, 98 and further prevents horn and anvil from touching each other. These controls are handled independently for each individual ultrasonic vibrating system 100, 102, 104 and 106. Control unit 116 is then connected to a central power supply unit 118.

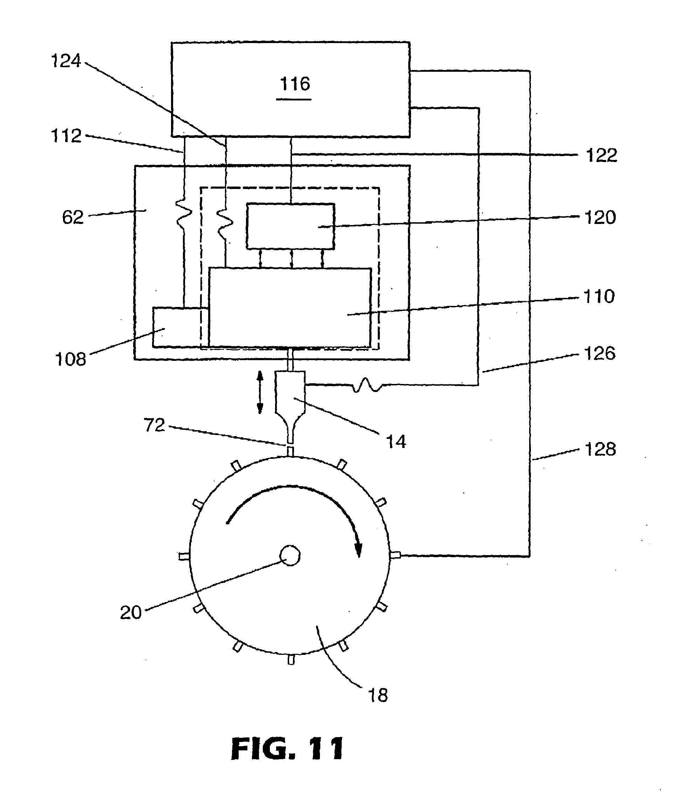

Fig. 11 shows an individual ultrasonic vibrating system, e.g. component 100 in Fig. 10. There are different types of control that can be utilized, the most preferred one is the so-called force control. The two main purposes of this equipment are to generate the vibrations for the ultrasonic welding and to ensure the control of gap 72 between the rotating drum 18 and the weld horn 14. As shown in Fig. 10, the driving unit 62 comprises a sensor 108 and an actuator 110. For the explanation of the control for the gap 72 further details are shown in Fig. 11. Actuator 110 provides the vibration for weld horn 14. Furthermore, a force sensor 108 is in contact with either the actuator 110 or directly with the weld horn 14. Its purpose is to sense the force that the weld horn is actuating onto the material to be joined. This sensor can be of any type for example some kind of a piezzo sensor. The force signal is passed to the electronic control unit 116 through the electrical connection 112. If the electronic control unit 116 identifies that the measured force is below a preset threshold value the entire system comprising actuator 110 sensor 108 and weld horn 14 is moved downwards through the driving means 120 which is electrically connected to the electronic control unit 116 through the wiring 122. Actuator 110 is connected through the wiring system 124 in a manner that a relative movement between control unit 116 and actuator 110 is possible. The weld horn 14 is also electrically connected to the electronic unit control through the wiring 126 which is also flexible. Rotating drum 18 is connected at its axis 20 to the electronic control unit 116 through wiring 128. As soon as the horn 14 makes contact with the protrusion or any other portion of the rotating drum 18 an electrical short circuit is created and sensed through the wirings 126, 128. The electronic control unit 116 then ensures that a minimum gap 72 is restored.

In accordance with the process of the invention, the materials to be joined ultrasonically are passing through gap 72 (not shown, see preceding figures) and the control mechanism operates in the following manner: If sensor 108 senses a force that is too low actuator 110 is moved down through driving means 120 until the threshold value for the force is obtained. The same occurs in the opposite direction when the force is too high. Accordingly a continuous control of the gap 72 is ensured by using conventional electronic control systems. Furthermore, the additional control of the conductivity between weld horn 14 and rotating drum 18 ensures that a minimum gap is maintained thus avoiding horn and anvil touching each other.

An alternative method for controlling the gap is to sense the distance between the weld horn 14 and the surface of the rotating drum 18 through a sensor that is placed within the rotating drum 18. Further details on ways to control the gap are found in WO 96/14202.

### Examples

The invention will be further described by the following examples and test results:

### Example 1

A scrim layer 94 (see Fig. 9) was used comprising a non-woven spun-bonded material produced in a known manner from fibers being multiple thermally bonded and randomly arranged. The basis weight of this non-woven spun-bonded material was 10 g/m². The spun-bonded web was combined with a non-woven material of the electret filter material consisting of electrostaticaly charged dielectric fibrillated or split fibers with the typical dimensions of 10 by 40 microns in a side view. The basis weight of this non-woven material was about 30 g/m². As materials for this electret filter layer products distributed under the designation of 3M Filtrete^{™} by the Minnesota, Mining and Manufacturing Company were used. The two layers, the scrim layer with a basis weight of 10 g/m² and the electret filter layer with a basis weight of 30 g/m², were then ultrasonically joined using a process as shown in Fig. 8 utilizing an equipment as described therein with a rotating drum of the above given dimensions according to Figs. 3 and 4 with top areas 38 of the bands 32 of 0.81x0.81 mm and a spacing between two adjacent protrusions 38 of 6.9 mm and a distance between 2 subsequent rows of 4.83 mm. This results in a portion of the ultrasonically joined area of the filter web of 1.5% of the total area in the rotating drum corresponding to about 2% of the area in the web due tot the fact that the portion of ultrasonically joined fibers is slightly larger in area than the portion of the rotating drum. The number of spots per cm² is about 2.3. The thus bonded laminate of filter media and scrim was adhered to a thermoplastic netting or a reticular support structure. This netting consists of fibers having a diameter of about 0.45 mm. The openings of the support structure are diamond shaped and have a size of about 3.6x4.1 mm. The thickness of the support structure is about 0.85 mm. The fibers consist of polypropylene or other polymers. The netting or reticular support structure was adhered to the laminate of the fiber media and scrim utilizing conventionally used adhesives. The thus obtained structure was then pleated and formed into a filter with a pleat height of 25 mm, pleat spacing of 9.4 mm and total dimensions of the filter of 290x100 mm resulting in 31 pleats. This construction was then appropriately mounted into a frame by gluing or insert-molding.

### Example 2

This Example differs from Example 1 only by the basic weight of the electret non-woven filter media which was chosen to be 40 g/m² so that together with the scrim of 10 g/m² a total basic weight of 50 g/m² was obtained.

### Example 3

Example 3 is similar to Example 2 except that in addition to a scrim layer, a netting was also ultrasonically welded to the web which had a weight of 50 g/m². This configuration was ultrasonic joined according to the process illustrated in Fig. 9.

### Example 4

Example 4 differs from Example 3 by the fact that the scrim was omitted. The basic weight of the web was chosen to be 50 g/m², the netting was as described above and the ultrasonic treatment was done as described in Fig. 8.

### Comparative Example

A larger number of Comparative Examples was created in the same manner as for the Examples 1-4 essentially differing in that a needling process was used instead of the ultrasonic bonding. For the comparison comparative samples were chosen that showed the same pressure drop as Examples 1-4. Thus filters with essentially the same initial performance were compared.

With the above described sample filters comparative measurements were conducted.

The efficiency was measured in accordance with the test norm DIN 71 460, part 1.

The measurement of the efficiency is conducted as follows: A test dust "coarse" according to DIN ISO 5011 is introduced according to §4.4 of DIN 71 460. This dust is measured with particle counters prior and after the entry through the filter to be tested. The particle counters have the capability of determining particles of different particle sizes ranging between 0.5 and 15 microns at least. The ratio within this particle range then is the efficiency in percent. All provisions according to DIN 71 460, §1-4.4.2, were taken into account. It is particularly important that the filters to be tested are identical in size and configuration as stated above for the different examples.

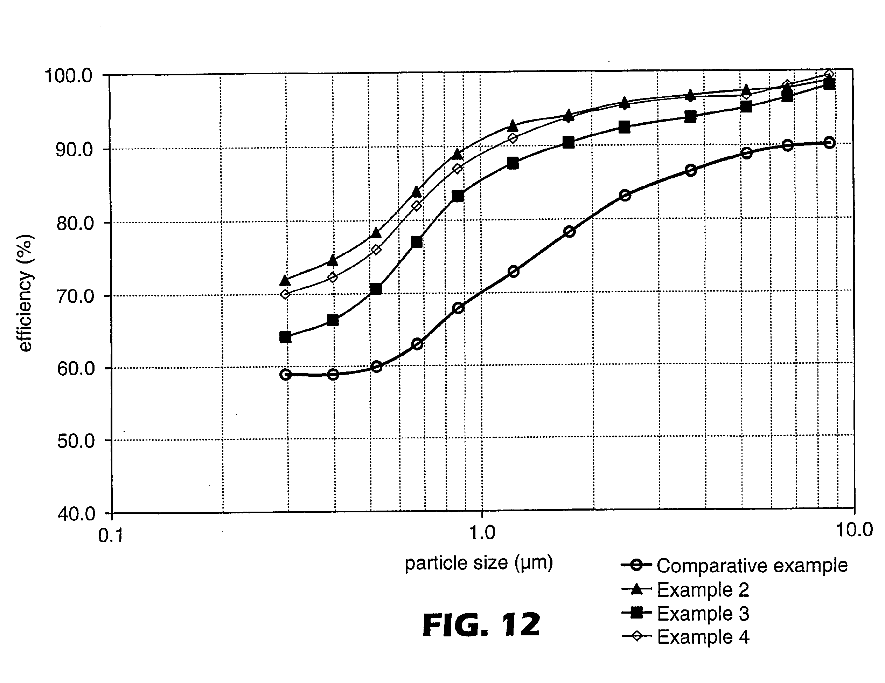

The results can be taken from Fig. 12. It shows Examples 1, 2 and 4 compared with the Comparative Example. It can be seen that for the tested range of particle sizes between 0.1 and 10 microns the efficiency is increased by about 10 percentage points.

Furthermore, the captured dust was determined for all 4 examples in comparison with the reference example. Also in this case the tests were conducted following the test norm DIN 71 460 part 1.

The determination of the captured dust was conducted as follows: All provisions of DIN 71 460, part 1, were taken into account which are relevant for the determination of the captured dust, especially §6.3. The measurement was carried out from an initial pressure drop until the pressure drop had been increased to a level of 25, 50, 75 and 100 Pa respectively. The filters were weighed prior and after the test. In this specific case the ratios between the Examples 1-4 and the Comparative Example were taken into account and the percentage increase of the captured dust with respect to the Comparative Example was determined. For the weighing also DIN ISO 5011 was to be applied.

The results are listed in Table 1, which shows the additional loading as compared to the needle type Comparative Example. The different steps are resulting in an increase of the pressure drop of 25, 50, 75 and 100 Pa respectively. It can be seen that the most significant improvement was obtained with Example 4, which did not include a scrim layer.

**Table 1**

| **Loading step:** Increase of pressure drop in Pa | **Example 1** | **Example 2** | **Example 3** | **Example 4** |
|---|---|---|---|---|
| Initial (+0 Pa) | 100% | 100% | 100% | 100% |
| | | | | |
| + 25 Pa | 162% | 148% | 117% | 260% |
| + 50 Pa | 139% | 134% | 109% | 217% |
| + 75 Pa | 148% | 139% | 113% | 229% |
| + 100 Pa | 152% | 139% | 112% | 234% |
| Average | 150% | 140% | 113% | 235% |

## Claims

1. An electret nonwoven filter medium comprising a nonwoven filter web of electrostatically charged fibrillated fibers ultrasonically joined to each other at a plurality of spots distributed across said nonwoven filter web, the total surface occupied by said spots being less than 5% of the surface of said nonwoven filter web and the number of spots per square centimeter being at least 2.

2. An electret nonwoven filter medium according to claim 1 wherein the number of spots per square centimeter is at least 8.

3. An electret nonwoven filter medium according to claim 1 wherein the total surface occupied by said spots is between 0.2% and 2% of the total surface of said nonwoven filter web.

4. An electret nonwoven filter medium according to claim 1 wherein the size of each of said spots is not more than 10⁻² cm².

5. An electret nonwoven filter medium according to claim 1 wherein said filter medium further includes a scrim layer that is ultrasonically bonded to said nonwoven filter web at said spots.

6. An electret nonwoven filter medium according to claim 1 wherein said filter medium further includes a netting that is ultrasonically bonded to said nonwoven filter web at said spots.

7. An electret nonwoven filter medium according to claim 1 wherein said filter medium further comprises a layer of nonwoven melt blown fibers ultrasonically bonded to said nonwoven filter web at said spots.

8. An electret nonwoven filter medium according to claim 1 having a width and length that are each 30cm or more.

9. A method of manufacturing an electret nonwoven filter medium, comprising the steps of:
(a) electrostatically charging a polymeric film;
(b) fibrillating a thus obtained electrostatically charged film so as to form electrostatically charged fibrillated fibers;
(c) forming the electrostatically charged dielectric fibrillated fibers into a non-woven filter web;
(d) consolidating said non-woven filter web by ultrasonically joining said dielectric fibrillated fibers to each other at a plurality of spots distributed across said non-woven filter web such that the total surface occupied by said spots is less than 5% of the surface of said nonwoven filter web and the number of spots per square centimeter is at least 2.

10. A method according to claim 9 wherein said method includes the step of transporting the non-woven filter web through an ultrasonic welding station, said ultrasonic welding station comprising two or more ultrasonic devices that are arranged next to each other in the direction perpendicular to the direction in which the non-woven filter web is transported, said non-woven filter web being transported through a gap between a ultrasonic vibrating unit and a mating tool of the ultrasonic devices and the size of said gap in each of said two or more ultrasonic devices being controlled independent of each other.

11. A method according to claim 10 wherein said mating tool is a rotating drum having a patterned surface to produce a desired pattern of said spots on said non-woven filter web.

12. A method according to claim 9 wherein said non-woven filter web is formed on a scrim layer and while said dielectric fibrillated fibers are joined to each other at said spots, said non-woven web layer is also joined to said scrim layer at said spots.

13. A method according to claim 9 wherein a netting is simultaneously with the ultrasonic joining of said dielectric fibrillated fibers joined to said non-woven filter web.

## Patentansprüche

1. Elektret-Vliesfiltermedium, umfassend eine Vliesfilterbahn aus elektrostatisch geladenen, fibrillierten Fasern, die miteinander an mehreren über die Vliesfilterbahn verteilten Punkten durch Ultraschall verbunden sind, wobei die gesamte durch die Punkte beanspruchte Fläche weniger als 5 % der Fläche der Vliesfilterbahn beträgt und die Anzahl der Punkte pro Quadratzentimeter mindestens 2 ist.

2. Elektret-Vliesfiltermedium nach Anspruch 1, wobei die Anzahl der Punkte pro Quadratzentimeter mindestens 8 ist.

3. Elektret-Vliesfiltermedium nach Anspruch 1, wobei die gesamte durch die Punkte beanspruchte Fläche zwischen 0,2 % und 2 % der Gesamtfläche der Vliesfilterbahn liegt.

4. Elektret-Vliesfiltermedium nach Anspruch 1, wobei die Größe von jedem der Punkte nicht mehr als 10⁻² cm² beträgt.

5. Elektret-Vliesfiltermedium nach Anspruch 1, wobei das Filtermedium ferner eine Gazeschicht enthält, die an den Punkten durch Ultraschall an die Vliesfilterbahn gebunden ist.

6. Elektret-Vliesfiltermedium nach Anspruch 1, wobei das Filtermedium ferner einen Netzstoff enthält, der an den Punkten durch Ultraschall an die Vliesfilterbahn gebunden ist.

7. Elektret-Vliesfiltermedium nach Anspruch 1, wobei das Filtermedium ferner eine Schicht aus schmelzgeblasenen Vliesfasern aufweist, die an den Punkten durch Ultraschall an die Vliesfilterbahn gebunden sind.

8. Elektret-Vliesfiltermedium nach Anspruch 1 mit einer Breite und Länge, die jeweils 30 cm oder mehr sind.

9. Verfahren zur Herstellung eines Elektret-Vliesfiltermediums, umfassend die Schritte:
(a) elektrostatisches Aufladen eines polymeren Films;
(b) Fibrillieren eines so erhaltenen elektrostatisch geladenen Films, um elektrostatisch geladene fibrillierte Fasern zu bilden;
(c) Formen der elektrostatisch geladenen dielektrischen fibrillierten Fasern zu einer Vliesfilterbahn;
(d) Verfestigen der Vliesfilterbahn, indem die dielektrischen fibrillierten Fasern an mehreren über die Vliesfilterbahn verteilten Punkten miteinander durch Ultraschall verbunden werden, so dass die gesamte durch die Punkte beanspruchte Fläche weniger als 5 % der Fläche der Vliesfilterbahn beträgt und die Anzahl der Punkte pro Quadratzentimeter mindestens 2 ist.

10. Verfahren nach Anspruch 9, wobei das Verfahren den Schritt des Transportierens der Vliesfilterbahn durch eine Ultraschallschweißstation enthält, wobei die Ultraschallschweißstation zwei oder mehr Ultraschallgeräte umfasst, die nebeneinander in der Richtung senkrecht zu der Richtung, in der die Vliesfilterbahn transportiert wird, angeordnet sind, wobei die Vliesfilterbahn durch eine Lücke zwischen einer Ultraschallvibrationseinheit und einem Gegenwerkzeug der Ultraschallgeräte transportiert wird und die Größe der Lücke in jedem der zwei oder mehr Ultraschallgeräte unabhängig voneinander gesteuert wird.

11. Verfahren nach Anspruch 10, wobei das Gegenwerkzeug eine rotierende Trommel mit einer gemusterten Fläche ist, um ein gewünschtes Muster der Punkte auf der Vliesfilterbahn zu produzieren.

12. Verfahren nach Anspruch 9, wobei die Vliesfilterbahn auf einer Gazeschicht geformt wird und die Vliesbahnschicht auch an den Punkten mit der Gazeschicht verbunden wird, während die dielektrischen fibrillierten Fasern miteinander an den Punkten verbunden werden.

13. Verfahren nach Anspruch 9, wobei ein Netzstoff gleichzeitig mit dem Ultraschallverbinden der dielektrischen fibrillierten Fasern mit der Vliesfilterbahn verbunden wird.

## Revendications

1. Moyen de filtrage non tissé à électrets comprenant une toile de filtrage non tissée de fibres fibrillées électrostatiquement chargées reliées par ultrasons les unes aux autres en une pluralité de points distribués sur ladite toile de filtrage non tissée, la surface totale occupée par lesdits points étant inférieure à 5 % de la surface de ladite toile de filtrage non tissée et le nombre de points par centimètre carré étant au moins de 2.

2. Moyen de filtrage non tissé à électrets selon la revendication 1 dans lequel le nombre de points par centimètre carré est au moins de 8.

3. Moyen de filtrage non tissé à électrets selon la revendication 1 dans lequel la surface totale occupée par lesdits points est comprise entre 0,2 % et 2 % de la surface totale de ladite toile de filtrage non tissée.

4. Moyen de filtrage non tissé à électrets selon la revendication 1 dans lequel la taille de chacun desdits points ne dépasse pas 10⁻² cm².

5. Moyen de filtrage non tissé à électrets selon la revendication 1 dans lequel ledit moyen de filtrage comprend en outre une couche de canevas qui est liée par ultrasons à ladite toile de filtrage non tissée au niveau desdits points.

6. Moyen de filtrage non tissé à électrets selon la revendication 1 dans lequel ledit moyen de filtrage comprend en outre un filet qui est lié par ultrasons à ladite toile de filtrage non tissée au niveau desdits points.

7. Moyen de filtrage non tissé à électrets selon la revendication 1 dans lequel ledit moyen de filtrage comprend en outre une couche de fibres non tissées fondues-soufflées liées par ultrasons à ladite toile de filtrage non tissée au niveau desdits points.

8. Moyen de filtrage non tissé à électrets selon la revendication 1 ayant une largeur et une longueur qui sont chacune de 30 cm ou plus.

9. Procédé de fabrication d'un moyen de filtrage non tissé à électrets, comprenant les étapes consistant à :
(a) charger électrostatiquement un film polymère,
(b) fibriller un film électrostatiquement chargé ainsi obtenu de manière à former des fibres fibrillées électrostatiquement chargées,
(c) former les fibres fibrillées diélectriques électrostatiquement chargées en une toile de filtrage non tissée,
(d) consolider ladite toile de filtrage non tissée en reliant par ultrasons lesdites fibres fibrillées diélectriques les unes aux autres en une pluralité de points distribués sur ladite toile de filtrage non tissée de telle manière que la surface totale occupée par lesdits points soit inférieure à 5 % de la surface de ladite toile de filtrage non tissée et que le nombre de points par centimètre carré soit au moins de 2.

10. Procédé selon la revendication 9 dans lequel ledit procédé comprend l'étape consistant à transporter la toile de filtrage non tissée à travers un poste de soudage par ultrasons, ledit poste de soudage par ultrasons comprenant deux ou plus de deux dispositifs ultrasoniques qui sont disposés l'un à côté de l'autre dans la direction perpendiculaire à la direction dans laquelle la toile de filtrage non tissée est transportée, ladite toile de filtrage non tissée étant transportée à travers un espace entre une unité vibrante ultrasonique et un outil d'accouplement des dispositifs ultrasoniques et la taille dudit espace dans chacun desdits deux ou plus de deux dispositifs ultrasoniques étant contrôlée indépendamment l'une de l'autre.

11. Procédé selon la revendication 10 dans lequel ledit outil d'accouplement est un tambour rotatif ayant une surface à motif pour produire un motif voulu desdits points sur ladite toile de filtrage non tissée.

12. Procédé selon la revendication 9 dans lequel ladite toile de filtrage non tissée est formée sur une couche de canevas et, tandis que lesdites fibres fibrillées diélectriques sont reliées les unes aux autres au niveau desdits points, ladite couche de toile non tissée est également reliée à ladite couche de canevas au niveau desdits points.

13. Procédé selon la revendication 9 dans lequel un filet est relié à ladite toile de filtrage non tissée de manière simultanée à l'union ultrasonique desdites fibres fibrillées diélectriques.
